# EUROPEAN PATENT APPLICATION

(11) **EP 4 617 767 A1**
(43) Date of publication of application: **17.09.2025**
(21) Application number: 23916141.7
(22) Date of filing: 16.11.2023
(51) Int. Cl.: G02F 1/015, G02F 1/025

(54) **HYBRID OPTICAL ELEMENT AND PRODUCTION METHOD FOR HYBRID OPTICAL ELEMENT**

(30) Priority: 12.01.2023 WO PCT/JP2023/000510
(71) Applicant: MITSUBISHI ELECTRIC CORPORATION, Chiyoda-ku Tokyo 100-8310 (JP)
(72) Inventor: SHIRAO, Mizuki, Tokyo 100-8310 (JP); MASUYAMA, Kei, Tokyo 100-8310 (JP)
(74) Representative: Plasseraud IP
(86) International application number: PCT/JP2023/041172
(87) International publication number: WO 2024/150523

(57) **Abstract**

A hybrid optical element according to the presently disclosed technique includes: a p-InP (7); a light absorbing layer (9); an n-InP (6); a dielectric thin film (10); an optical waveguide (8); a BOX layer (11); and a core substrate (12) in order from a surface, wherein the n-InP (6) has a first taper (1), the light absorbing layer (9) has a second taper (2), the light absorbing layer (9) is exposed in the second taper (2), the p-InP (7) includes a modulation part (15), a third taper (3) is disposed between the second taper (2) and the modulation part (15), the second taper (2) is not provided in the p-InP (7), optical absorption is limited to an area close to a p electrode (5), and the third taper (3) has a taper length which is five percent or less of the length of the modulation part (15).

## Description

### TECHNICAL FIELD

The presently disclosed technique relates to a hybrid optical element.

### BACKGROUND ART

Hybrid optical elements in which high-efficiency optical devices are integrated on a silicon waveguide are known. The term "hybrid" in hybrid optical elements is synonymous with those used in "hybrid IC" and "hybrid integrated circuit", and is used as the opposite of "monolithic".

Hybrid optical elements are used as devices for optical Ethernet communications, for example. In more detail, hybrid optical elements are used as communication devices based on a transmission method, such as Non-Return-to-Zero (NRZ) or Pulse Amplitude Modulation (PAM), for example.

High-efficiency optical devices are implemented by compound semiconductors, for example. A silicon waveguide and a compound semiconductor waveguide are connected by an adiabatic transition which uses tapers. The compound semiconductor includes an n-type semiconductor as its bottom part and a p-type semiconductor as its top part, and has a pn junction. As the tapers, there is a taper (referred to as a "first taper" hereinafter) at a point where the n-type semiconductor is exposed on the front surface, and a taper (referred to as a "second taper" hereinafter) at a point where the p-type semiconductor is exposed on the front surface.

For example, a hybrid light device having a structure for improving the electric resistance in a light source device is disclosed in Patent Literature 1.

### CITATION LIST

### PATENT LITERATURE

Patent Literature 1: JP 2019-140319 A

### SUMMARY OF INVENTION

### TECHNICAL PROBLEM

A hybrid optical element is applied to an electro-absorption modulator (also referred to as an EA modulator), for example. In the case where a hybrid optical element is applied to an EA modulator, a tip part in a second taper of the hybrid optical element is easily coupled to a TM mode which corresponds to a vertically-long waveguide shape, and a transition: (1) TE [Si waveguide] → (2) TM [taper tip] → (3) TE [taper root] → TE [EA modulator] is made in many cases. Therefore, a long taper is required and the size of the device becomes large in order to provide sufficient coupling. In the above, TE and TM denote propagation modes of electromagnetic waves.

In the case where a hybrid optical element is applied to a high speed modulation element such as an EA modulator, it is necessary to reduce the area of the modulator as much as possible for the reason for reducing the parasitic capacitance (also referred to as the stray capacity). The increase in the parasitic capacitance causes degradation in the high frequency characteristics of the device.

On the other hand, when the area of the modulator is reduced, the taper lengths become short and the above-mentioned coupling is no longer provided. In addition, in the EA modulator, a modulation bias is applied also to the tapers, and non-intended optical absorption occurs in the tapers and an insertion loss occurs.

Therefore, the taper lengths must be designed in consideration of the problem of the trade-off between the sufficient coupling and a reduction in the parasitic capacitance.

The presently disclosed technique aims to solve the above-mentioned trade-off problem, and shortens tapers while ensuring sufficient coupling and implements a reduction in the parasitic capacitance in hybrid optical elements.

### SOLUTION TO PROBLEM

A hybrid optical element according to the presently disclosed technology includes: a p-InP; a light absorbing layer; an n-InP; a dielectric thin film; an optical waveguide; a BOX layer; and a core substrate in order from a surface, wherein the n-InP has a first taper, the light absorbing layer has a second taper, the light absorbing layer is exposed in the second taper, the p-InP includes a modulation part, a third taper is provided between the second taper and the modulation part, the second taper is not provided in the p-InP, optical absorption is limited to an area close to a p electrode, and the third taper has a taper length which is five percent or less of the length of the modulation part.

### ADVANTAGEOUS EFFECTS OF INVENTION

Because the hybrid optical element according to the presently disclosed technique includes the above-mentioned structure, the tapers are shortened while sufficient coupling is ensured and a reduction in the parasitic capacitance is implemented.

### BRIEF DESCRIPTION OF DRAWINGS

Fig. 1 is a structural drawing of a hybrid optical element according to Embodiment 1;
Fig. 2 is an explanatory drawing No. 1 showing an attachment process which is a part of a process of manufacturing the hybrid optical element according to Embodiment 1;
Fig. 3 is an explanatory drawing No. 2 showing the attachment process which is a part of the process of manufacturing the hybrid optical element according to Embodiment 1;
Fig. 4 is a graph showing the state of a propagation mode transition which occurs in the hybrid optical element according to Embodiment 1;
Fig. 5 is structural drawing at a time of applying a conventional hybrid optical element to an EA modulator;
Fig. 6 is a graph showing the state of a propagation mode transition which occurs in the conventional hybrid optical element;
Fig. 7 is a graph showing the coupling efficiency of the hybrid optical element according to the presently disclosed technique, which is compared with that of the conventional technique;
Fig. 8 is a structural drawing of a hybrid optical element according to Embodiment 2;
Fig. 9 is a graph showing the state of a propagation mode transition which occurs in the hybrid optical element according to Embodiment 2;
Fig. 10 is a structural drawing of a hybrid optical element according to Embodiment 3;
Fig. 11A and Fig. 11B are structural drawings of a hybrid optical element according to Embodiment 7;
Fig. 12 is a graph showing the coupling efficiency of the hybrid optical element according to Embodiment 1 and the coupling efficiency of the hybrid optical element according to Embodiment 7, which are compared with that of the conventional technique; and
Fig. 13 is a graph showing a relation between the taper length of a second taper 2-2 and the coupling efficiency in the hybrid optical element according to Embodiment 7.

### DESCRIPTION OF EMBODIMENTS

A hybrid optical element according to the presently disclosed technique is applied as an EA modulator.

### Embodiment 1.

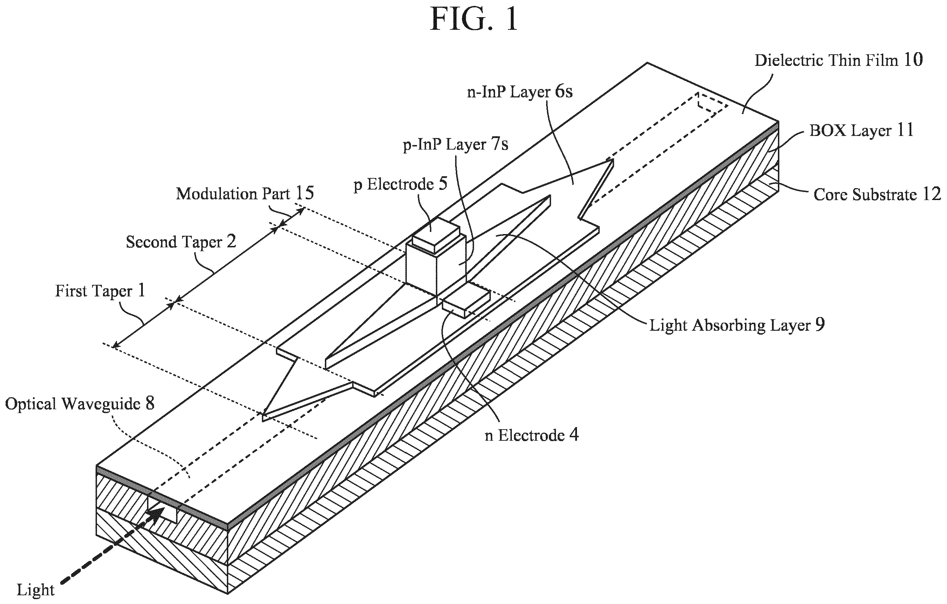

Fig. 1 is a structural drawing (perspective view) of a hybrid optical element according to Embodiment 1.

As shown in Fig. 1, the hybrid optical element according to Embodiment 1 includes an n electrode 4, a p electrode 5, an n-InP layer 6s, a p-InP layer 7s, an optical waveguide 8, a light absorbing layer 9, a dielectric thin film 10, a BOX layer 11, and a core substrate 12.

A first taper 1 is formed in the n-InP 6. Further, a second taper 2 is formed in the light absorbing layer 9.

The optical waveguide 8 uses a difference between refractive indices. The optical waveguide 8 uses the feature of light being localized and propagating in a region where its refractive index is high, such as silicon.

The optical waveguide 8 may be an Si waveguide or an SiN waveguide. In the hybrid optical element according to Embodiment 1, it is assumed that the optical waveguide 8 is an Si waveguide. An embodiment in which the optical waveguide 8 is an SiN waveguide is shown in Embodiment 5.

### <<A process of manufacturing the hybrid optical element>>

The primary material of the hybrid optical element includes a silicon photonics substrate 14 and an InP epitaxial substrate 13.

The silicon photonics substrate 14 is the one in which the dielectric thin film 10 is provided as the outermost layer, and has a waveguide structure. The dielectric in the dielectric thin film 10 is typically SiO₂ or Al₂O₃. In this specification, it is assumed that the dielectric thin film 10 is an SiO₂ thin film. The InP epitaxial substrate 13 is manufactured through a process of epitaxially growing and then forming a layer structure including the light absorbing layer 9 on an n-InP substrate.

The process of manufacturing the hybrid optical element includes a process of joining the silicon photonics substrate 14 and the InP epitaxial substrate 13.

The joining of the silicon photonics substrate 14 and the InP epitaxial substrate 13 is implemented by wafer bonding to which surface-activated bonding technique is applied.

The joined surface between the silicon photonics substrate 14 and the InP epitaxial substrate 13 is the one between the dielectric thin film 10 (SiO₂ thin film) and the n-InP layer 6s in principle. As an alternative, by depositing SiO₂ on the n-InP 6, the joined surface can be made to be the one between SiO₂ and SiO₂ which are the dielectric thin film 10 (SiO₂ thin film) and SiO₂ deposited on the n-InP 6.

The substrate acquired by joining the silicon photonics substrate 14 and the InP epitaxial substrate 13 is referred to as the hybrid substrate.

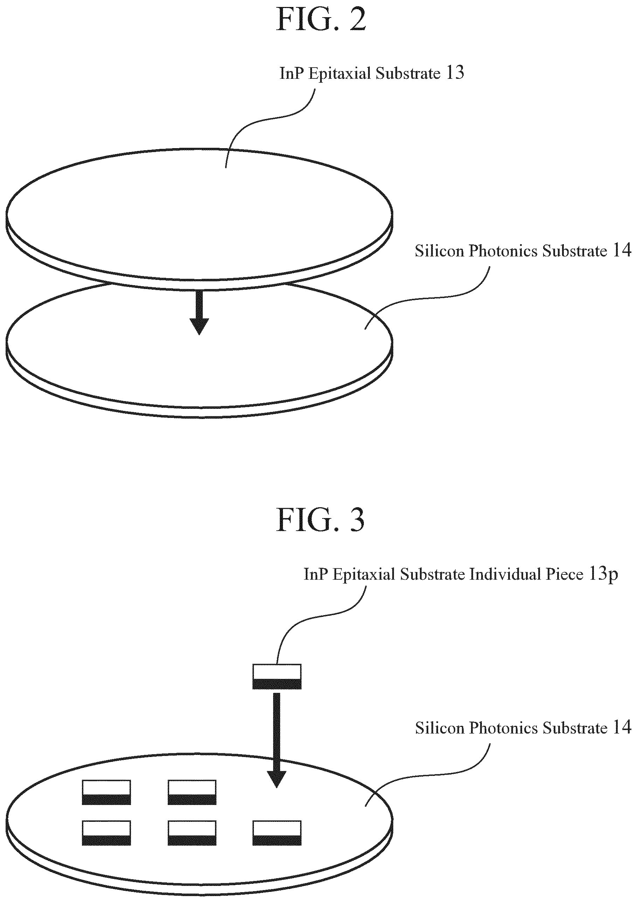

Fig. 2 is an explanatory drawing No. 1 showing an attachment process which is a part of the process of manufacturing the hybrid optical element according to Embodiment 1. As shown in Fig. 2, an example of the joining of the silicon photonics substrate 14 and the InP epitaxial substrate 13 may be the joining of circular substrates.

Fig. 3 is an explanatory drawing No. 2 showing the attachment process which is a part of the process of manufacturing the hybrid optical element according to Embodiment 1. As shown in Fig. 3, an example of the joining of the silicon photonics substrate 14 and the InP epitaxial substrate 13 may be the attachment of InP epitaxial substrate individual pieces 13p, obtained by fragmenting the InP epitaxial substrate 13, onto the silicon photonics substrate 14.

It is preferable that the dielectric thin film 10 in the silicon photonics substrate 14 has a thickness less than or equal to 300 [nm]. By making the thickness be less than or equal to 300 [nm], it becomes easier to provide optical coupling between the optical waveguide 8 and the light absorbing layer 9.

The InP epitaxial substrate 13 is manufactured by epitaxially growing an n-InP buffer layer, the light absorbing layer 9, and the p-InP layer 7s on an n-InP substrate. In the epitaxial growth at the time of manufacturing the InP epitaxial substrate 13, a layer structure of the order of several micrometers is generated. The thickness of the n-InP substrate ranges approximately from 300 [µm] to 1 [mm], depending on the diameter of the n-InP substrate.

There is a case in which in either of the n-InP layer 6s and the p-InP layer 7s which are formed through the epitaxial growth, a mixed crystal material, such as GaInAs, AlInAs, InGaAlAs, or GaInAsP, is inserted. The insertion of a mixed crystal material is performed for the purposes of, for example, confining a carrier caused by photocurrent, reducing the resistance of contact with a metal electrode, and forming an etch stop layer which is needed for forming processes.

GaInAs is often referred to as indium gallium arsenide (InGaAs) in the semiconductor field. GaInAs is a ternary alloy (compound) of indium arsenide (InAs) and gallium arsenide (GaAs). Both indium arsenide (InAs) and gallium arsenide (GaAs) are 3-5 (roman numerals) compound semiconductors.

The light absorbing layer 9 has a quantum well structure. A quantum well refers to a state in which the direction of movement of particles such as electrons is restricted. Further, the light absorbing layer 9 is designed in such a way as to absorb light in a 1.3 [µm] wavelength band or in a 1.55 [µm] wavelength band by means of the quantum Stark effect when an electric field is applied thereto. As the quantum well, a mixed crystal material such as InGaAlAs or GaInAsP is used, for example.

The process of manufacturing the hybrid optical element includes a semiconductor process of forming a device structure on the hybrid substrate. In general, it can be said that the process of forming a device structure is one of forming many transistors and many wires on a semiconductor chip, to arrange an electric circuit. This process is performed after "a process of designing a wiring circuit" which is a pre-process of semiconductor manufacturing. An example of the process of forming a device structure is one of drawing a pattern on an original plate called a photomask using a computer, and transferring this pattern onto a semiconductor wafer, to form a circuit.

In the process of manufacturing the hybrid optical element according to the presently disclosed technique, most of the n-InP layer 6s which is the outermost layer of the hybrid substrate is removed by etching, so that the n-InP layer is thinned to several hundred [µm] to several [µm].

After that, by using lithography technique and dry etching technique, a tapered structure shown in Fig. 1 is formed.

As to the thicknesses of the layers, the thickness of the n-InP 6 is set to 200 [nm], the thickness of the light absorbing layer 9 is set to 500 [nm], and the thickness of the p-InP 7 is set to 2 [µm], for example.

The thickness of the n-InP 6 needs to be thin enough to achieve optical coupling between the optical waveguide 8 and the light absorbing layer 9. When the thickness of the n-InP 6 exceeds approximately 300 [nm], the optical coupling becomes weaker and the taper length needed for the transition between propagation modes becomes remarkably long.

It is essential to provide the p-InP 7 with sufficient thickness to prevent the propagation mode from reaching the p electrode 5 and causing an optical loss.

The first taper 1 is formed in such a way that the n-InP 6 is exposed on the front surface. Further, the second taper 2 is formed in such a way that the light absorbing layer 9 is exposed on the front surface.

The light absorbing layer 9 is comprised of a ternary mixed crystal or a quaternary mixed crystal whose refractive index is higher than that of the n-InP 6. Because it is undesirable for the n-InP layer 6s and the light absorbing layer 9 to be exposed to the atmosphere when forming the tapers, the layers may be covered by a very thin InP protective layer having a thickness less than or equal to 100 [nm].

The hybrid optical element formed through the above process has a small effective refractive index difference occurring between the optical waveguide 8 and a tip part of the second taper 2. Therefore, in the first taper 1, an adiabatic transition can occur over a very short distance. In the hybrid optical element according to the presently disclosed technique, the taper length of the first taper 1 can be set to 10 [µm].

While the longer the length of a modulation part 15 in the p-InP layer 7s, the better the extinction ratio improves, the parasitic capacitance increases and the operating band becomes low when the modulation part is too long. Also as to the length of the modulation part 15, there is a problem of a trade-off between the extinction ratio and the parasitic capacitance.

In the case where the application of the hybrid optical element is for devices based on 53GBaud PAM4 which is the current mainstream optical Ethernet communications system, the length of the modulation part 15 may be set to approximately 200 [µm]. In the case where the application of the hybrid optical element is for devices based on 106GBaud PAM4 which is the next-generation optical Ethernet communications system, the operating band is doubled and the length of the modulation part 15 is set to approximately 100 [µm], which is suitable. PAM4 stands for 4-level Pulse-Amplitude Modulation. To be more specific, PAM4 is a method of transmitting information as a quaternary pulse signal, instead of a conventional binary bit sequence which consists of "0" and "1".

### <<Movements or behaviors of light in the hybrid optical element>>

Light incident on the hybrid optical element propagates through the optical waveguide 8 in the TE mode. TE stands for Transverse Electric. The TE mode is a term showing the mode in the case where there is no electric field in the transmission direction. In this specification, the mode at the time when the incident light propagates through the optical waveguide 8 is referred to as the "TE base mode." Further, in this specification, the TE mode for the light absorbing layer 9 is referred to as the "TE fundamental mode", and both the modes are distinguished from each other.

The propagating light reaches the modulation part 15 via the first taper 1 and the second taper 2.

A reverse bias is applied between the p electrode 5 and the n electrode 4. When the reverse bias is applied, an optical absorption occurs in the light absorbing layer 9 because of the quantum confined Stark effect (simply referred to as the "quantum Stark effect"). The Stark effect is a phenomenon in which when a uniform external electric field is applied to atoms or molecules, their spectrum changes.

By changing the magnitude of the reverse bias, the amount of absorption of light in the modulation part 15 can be changed. By using this characteristic, the hybrid optical element according to the presently disclosed technique is enabled to perform light intensity modulation such as NRZ or PAM.

The absorption of light is considered to occur only in the region where the p-InP 7 is present. The light which has passed through the modulation part 15 passes through the tapered structure again, and returns to the optical waveguide 8.

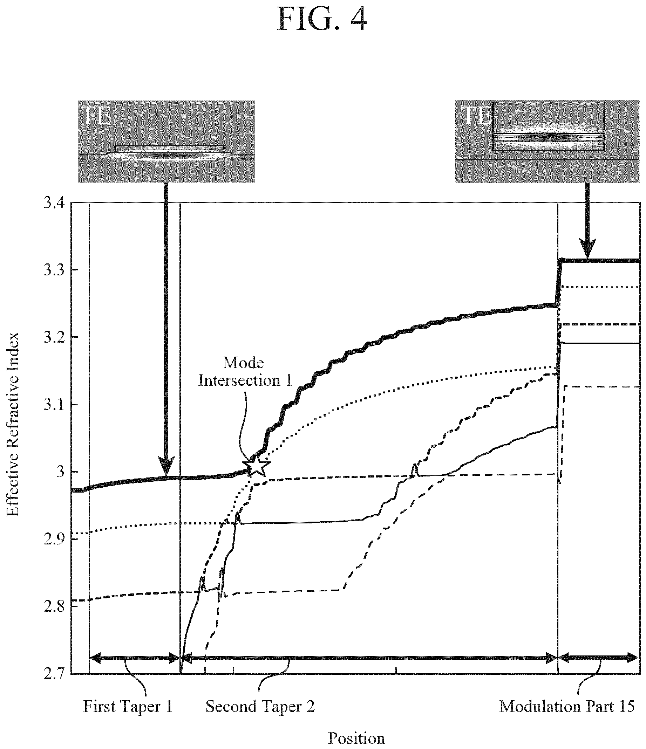

Fig. 4 is a graph showing the state of a propagation mode transition which occurs in the hybrid optical element according to Embodiment 1. In the graph shown in Fig. 4, the horizontal axis shows the position and the vertical axis shows the effective refractive index. The performance refractive index (effective refractive index) may be referred to as the effective refractive index.

The graph shown in Fig. 4 is a result of performing a mode analysis in a cross section of the waveguide shown in Fig. 1. The graph in Fig. 4 shows the top five modes with the high effective refractive index values. The mode shown by the thick solid curve and having the highest effective refractive index is the dominant mode.

As shown in Fig. 4, the result of the mode analysis shows that mode intersections which occur in the second taper 2 of the hybrid optical element according to Embodiment 1 include only one mode intersection denoted by "mode intersection 1." Here, a mode intersection refers to a phenomenon in which two modes of propagation have the same propagation constant at the same wavelength.

The light which has propagated through the optical waveguide 8 in the TE base mode intersects the TE fundamental mode of the light absorbing layer 9 in the second taper 2, and undergoes a mode conversion. This mode conversion is an adiabatic behavior.

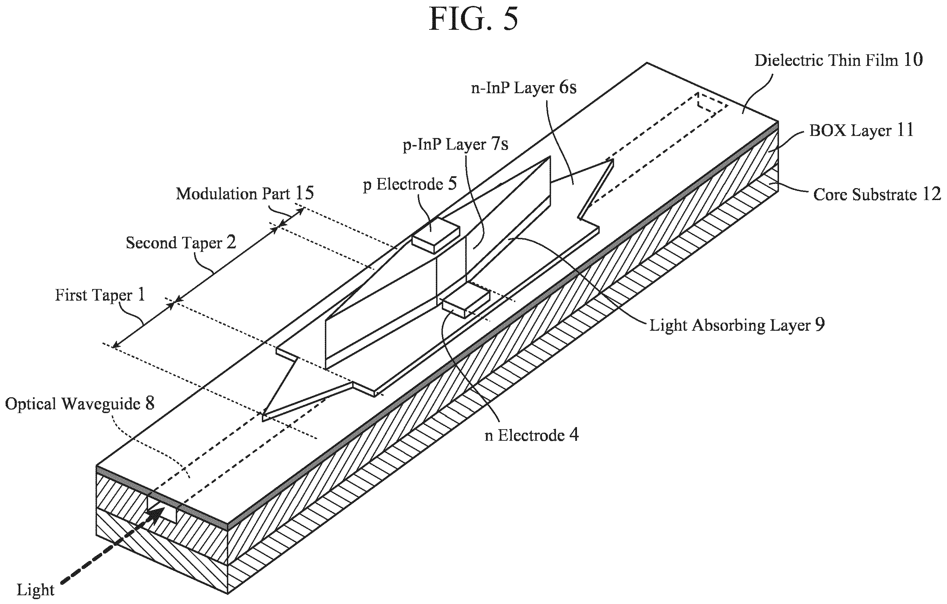

A technical feature of the hybrid optical element according to Embodiment 1 is that the light absorption layer 9 is exposed in the second taper 2. Fig. 5 is a structural drawing (perspective view) in the case of applying a conventional hybrid optical element to an EA modulator. By comparing Fig. 1 (Embodiment 1) with Fig. 5 (conventional element), the technical feature of the hybrid optical element according to Embodiment 1 becomes clear. In other words, the technical feature of the hybrid optical element according to Embodiment 1 is that there is no p-InP in the second taper 2.

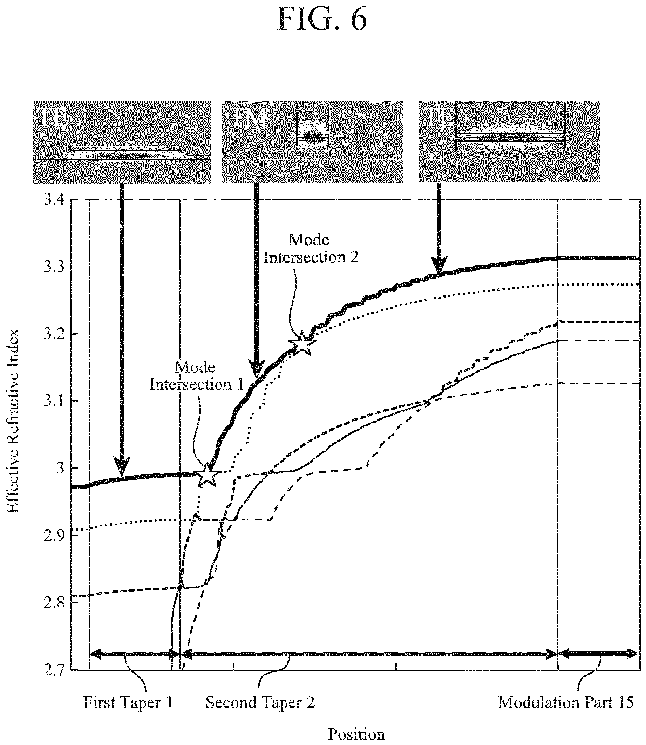

Further, Fig. 6 is a graph that shows the state of a propagation mode transition which occurs in the conventional hybrid optical element.

As shown in Fig. 6, a result of a mode analysis shows that mode intersections which occur in the taper part (corresponding to the second taper 2) of the hybrid optical element according to the conventional technique include a mode intersection denoted by "mode intersection 1" and a mode intersection denoted by "mode intersection 2", which are two mode intersections in total. More specifically, two mode conversions via the TM mode occur in the conventional hybrid optical element.

The reason why two mode conversions occur in the conventional hybrid optical element is considered to be due to the fact that the electric field distribution of the TM mode is more susceptible to the influence in the thickness direction, that the TM fundamental mode of the light absorption layer increases near the taper tip because of the influence of the p-InP, and that the effective refractive index becomes higher than that in the TE fundamental mode of the light absorption layer.

Because the hybrid optical element according to Embodiment 1 has the above-mentioned technical feature, the effective refractive index near the taper tip in the TM fundamental mode is maintained low in the hybrid optical element according to Embodiment 1. Because of this operation effect, a mode intersection between the propagating mode and the TM fundamental mode does not occur in the hybrid optical element according to Embodiment 1.

The technical features according to the presently disclosed technique which are compared with those of the conventional technique are as described in the following table.

**Table 1**

| Item | Conventional Technique | Presently Disclosed Technique |
|---|---|---|
| Second Taper | Light Absorbing Layer Is Not Exposed | Light Absorbing Layer Is Exposed |
| p-InP in Second Taper | Exist | Does Not Exist |
| Optical Absorption | Electric Field Occurring Because of Application of Reverse Bias Is Widely Distributed over Light Absorbing Layer via Second Taper | Optical Absorption Is Limited to near p Electrode |
| Extinction in Any Area Other Than Modulation Part | Present | Absent |
| Optical Loss | Present | Low Compared with Conventional Technique |
| High Frequency Characteristic | Carrier Drawing-Out Time Is Long in Area Far from p Electrode | Good Compared with Conventional Technique |
| | => Does Not Respond at High Speed | |

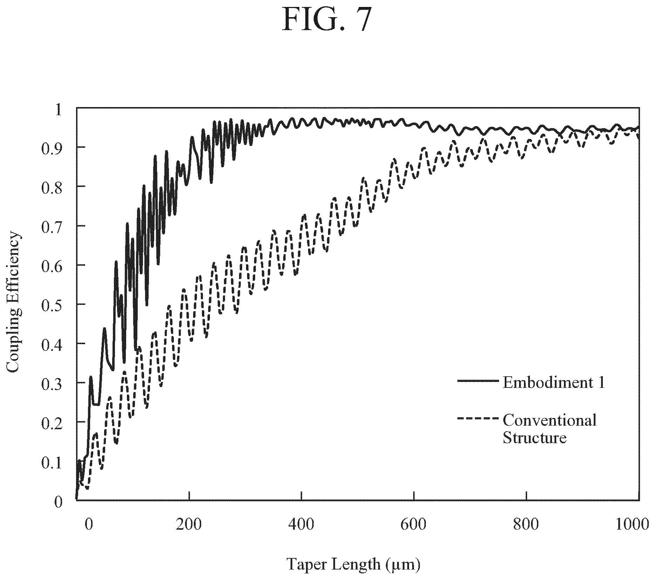

Fig. 7 is a graph showing the coupling efficiency (a simulation result) of the hybrid optical element according to the presently disclosed technique, which is compared with that of the conventional technique. In the graph shown in Fig. 7, the horizontal axis shows the taper length of the second taper 2, and the vertical axis shows the coupling efficiency. Further, in the graph shown in Fig. 7, the simulation result of the hybrid optical element according to Embodiment 1 is shown by a solid curved line, and a simulation result of the hybrid optical element according to the conventional structure is shown by a broken curved line. As shown in Fig. 7, in the hybrid optical element according to the presently disclosed technique, the taper length required to provide sufficient coupling is short compared with that of the conventional technique. In more detail, the simulation shown in Fig. 7 shows that the taper length required for the coupling efficiency to be 80 [%] is short to the extent that the taper length is approximately one-third of that of the conventional technique.

The hybrid optical element according to Embodiment 1 functions as an EA modulator, and makes a transition from the mode of the optical waveguide 8 to that of the light absorbing layer 9 by means of the optical coupler of adiabatic transition type having a tapered shape.

As mentioned above, because the hybrid optical element according to Embodiment 1 has the above-mentioned technical feature, the hybrid optical element provides an advantageous effect of shortening the taper while ensuring sufficient coupling and reducing the parasitic capacitance.

### Embodiment 2.

A hybrid optical element according to Embodiment 2 is a variant of the hybrid optical element according to the presently disclosed technique. Unless otherwise specified, the same reference signs as those used in Embodiment 1 are used in Embodiment 2. Further, the same explanation as that in Embodiment 1 will be omitted as appropriate in Embodiment 2.

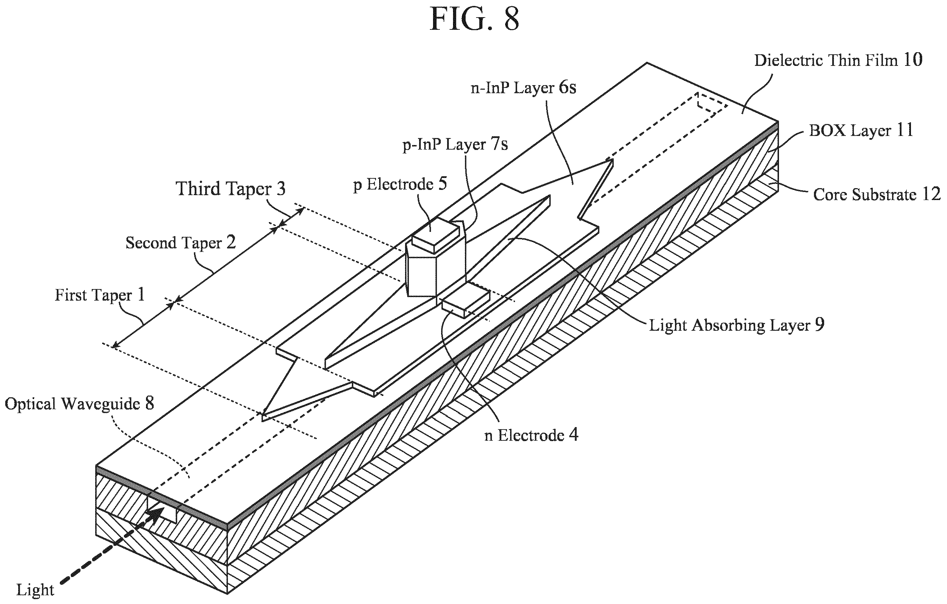

Fig. 8 is a structural drawing (perspective view) of the hybrid optical element according to Embodiment 2. As shown in Fig. 8, the hybrid optical element according to Embodiment 2 includes a very short third taper 3 in a p-InP layer 7s and between a second taper 2 and a modulation part 15.

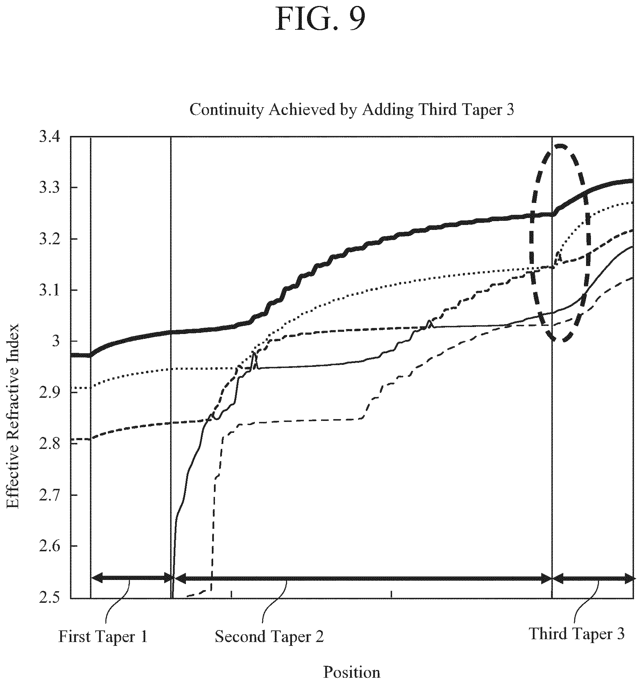

Fig. 9 is a graph showing the state of a propagation mode transition which occurs in the hybrid optical element according to Embodiment 2.

As can be seen from Fig. 9 (Embodiment 2) when comparing with Fig. 4 (Embodiment 1), in the hybrid optical element according to Embodiment 2, a discontinuous rapid change in the effective refractive index which occurs on the boundary between the second taper 2 and the modulation part 15 is changed to a continuous slow change. This property shown in Fig. 9 is a result of including the very short third taper 3 between the second taper 2 and the modulation part 15, thereby preventing a p-InP from suddenly occurring along the optical path.

An advantageous effect peculiar to the hybrid optical element according to Embodiment 2 is that a mode conversion between the second taper 2 and the modulation part 15 can be made adiabatically, and an optical coupling loss which can occur in this part can be reduced.

By the way, because the effective refractive index difference which occurs between an end part of the second taper 2 and the modulation part 15 is as low as approximately 0.1, good coupling can be achieved when the taper length is approximately 10 [µm].

In order to sufficiently provide the advantageous effect shown in Embodiment 1, it is necessary to pay attention to the design of the taper length of the third taper 3 in such a way that the third taper is not too long. In order to make the increase in the parasitic capacitance which occurs as a result of adding the third taper 3 be less than or equal to 10 [%], for example, it is preferable that the taper length of the third taper 3 is 5% or less relative to the length of the modulation part 15 (because the third taper 3 locates on the both sides of the modulation part 15).

### Embodiment 3.

A hybrid optical element according to Embodiment 3 is a variant of the hybrid optical element according to the presently disclosed technique. Unless otherwise specified, the same reference signs as those used in the already-described embodiments are used in Embodiment 3. Further, the same explanation as those in the already-described embodiments will be omitted as appropriate in Embodiment 3.

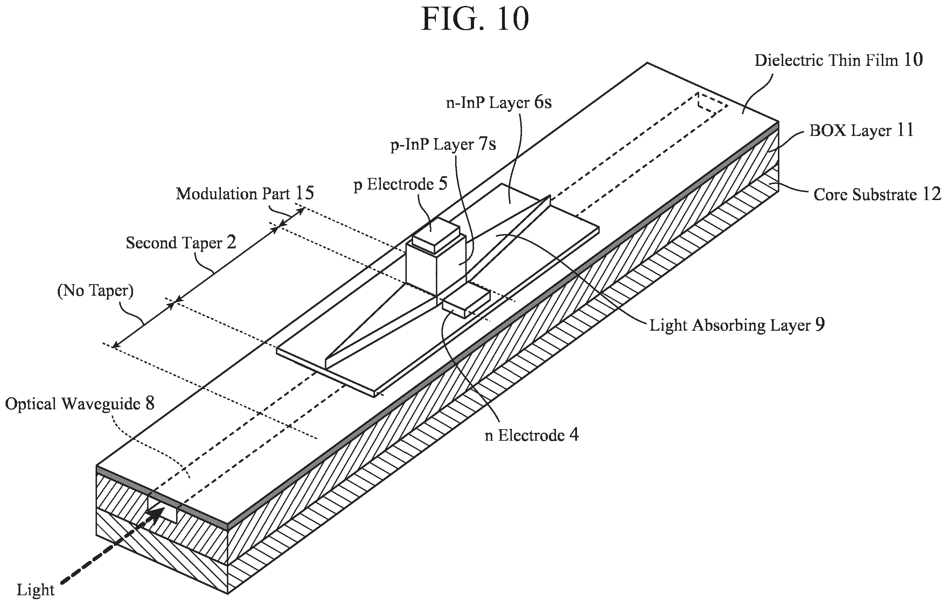

Fig. 10 is a structural drawing of the hybrid optical element according to Embodiment 3. As shown in Fig. 10, in the hybrid optical element according to the presently disclosed technique, a first taper 1 is not an indispensable component.

A simulation result shows that the effective refractive index difference between an optical waveguide 8 and a tip part of a second taper 2 is as low as about 0.02. Therefore, even though the structure without the first taper 1 (refer to Fig. 10) is adopted, it will not result in a significant increase in losses.

Because the structure without the first taper 1 (refer to Fig. 10) requires fewer tapers that need to be processed with a high degree of precision in the manufacturing process, the alignment accuracy can be lowered, for example, and, as a result, the manufacturing cost can be reduced. Further, it can be expected that variations in the characteristics resulting from an alignment deviation which can occur in the first taper 1 are eliminated, and yields are improved.

### Embodiment 4.

A hybrid optical element according to Embodiment 4 is a variant of the hybrid optical element according to the presently disclosed technique. Unless otherwise specified, the same reference signs as those used in the already-described embodiments are used in Embodiment 4. Further, the same explanation as those in the already-described embodiments will be omitted as appropriate in Embodiment 4.

Although it is shown in Embodiment 1 that the joining of a silicon photonics substrate 14 and an InP epitaxial substrate 13 is implemented by wafer bonding to which surface-activated bonding technique is applied, the presently disclosed technique is not limited to this example. The joining of the silicon photonics substrate 14 and the InP epitaxial substrate 13 may be performed using a resin material such as BCB.

The joining using a resin material, such as BCB, can prevent a poor attachment which can occur in the surface-activated bonding.

Such a resin material has the property of being relatively soft, and therefore can implement a good attachment without voids even in a case that a fine foreign object is mixed into the surfaces of the substrates.

### Embodiment 5.

A hybrid optical element according to Embodiment 5 is a variant of the hybrid optical element according to the presently disclosed technique. Unless otherwise specified, the same reference signs as those used in the already-described embodiments are used in Embodiment 5. Further, the same explanation as those in the already-described embodiments will be omitted as appropriate in Embodiment 5.

As described in Embodiment 1, an optical waveguide 8 disposed on a silicon photonics substrate 14 may be an SiN waveguide.

Because SiN waveguides have the property of being less likely to produce a nonlinear optical effect, compared with Si waveguides, SiN waveguides can be used for the application with a higher light density. The refractive index of SiN is low compared with that of Si. Therefore, SiN waveguides can increase the propagation mode and can provide a high efficiency of coupling with an optical fiber (a light absorbing layer 9 in figures).

SiN has an electro-optical effect which is not so high compared with that of Si. Therefore, although it is difficult to manufacture an optical modulation unit using SiN alone, a modulator which has an SiN waveguide can be manufactured through the manufacturing process according to the presently disclosed technique.

### Embodiment 6.

A hybrid optical element according to Embodiment 6 is a variant of the hybrid optical element according to the presently disclosed technique. Unless otherwise specified, the same reference signs as those used in the already-described embodiments are used in Embodiment 6. Further, the same explanation as those in the already-described embodiments will be omitted as appropriate in Embodiment 6.

Although explanations are made in the already-described embodiments, assuming that the hybrid optical element is an EA modulator, the presently disclosed technique is not limited to this example. The hybrid optical element according to the presently disclosed technique may be a device in which a directly modulated laser diode is formed on an optical waveguide 8.

The device according to the presently disclosed technique in which a directly modulated laser diode is formed can reduce the parasitic capacitance and make a high-speed response.

### Embodiment 7.

A hybrid optical element according to Embodiment 7 is a variant of the hybrid optical element according to the presently disclosed technique. Unless otherwise specified, the same reference signs as those used in the already-described embodiments are used in Embodiment 7. Further, the same explanation as those in the already-described embodiments will be omitted as appropriate in Embodiment 7.

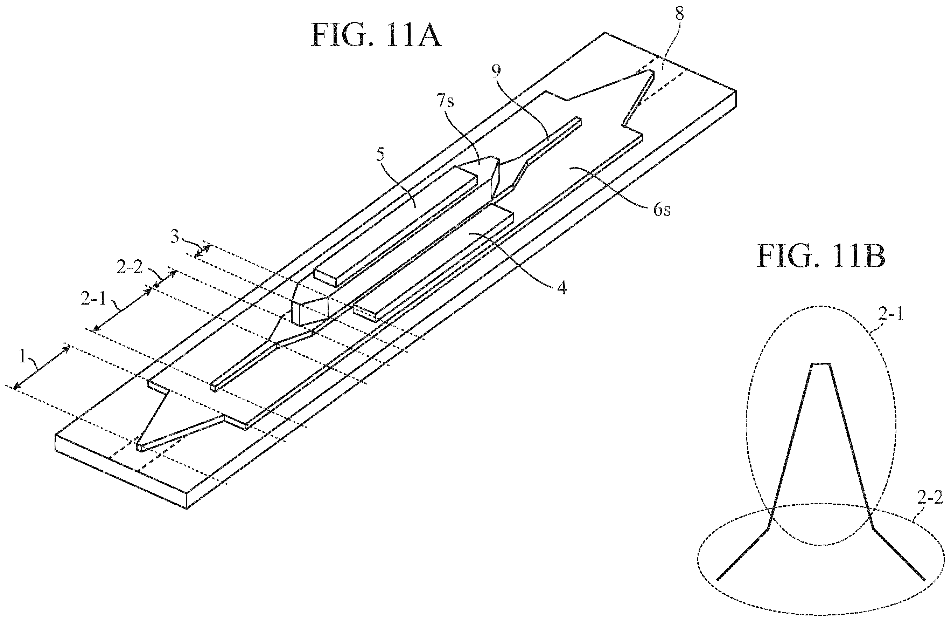

Fig. 11A and Fig. 11B are structural drawings (perspective view) of the hybrid optical element according to Embodiment 7. As illustrated in Fig. 11, in the hybrid optical element according to the presently disclosed technique, a second taper 2 in a light absorbing layer 9 does not have a strictly linear slope, and may be a polygonal line in which its tip part is a second taper 2-1 having a small slope (its taper ratio is also small) and its root part is a second taper 2-2 having a large slope (its taper ratio is also large). In the hybrid optical element illustrated in Fig. 11, the taper length of the second taper 2-1 is designed to be long, and the taper length of the second taper 2-2 is designed to be short.

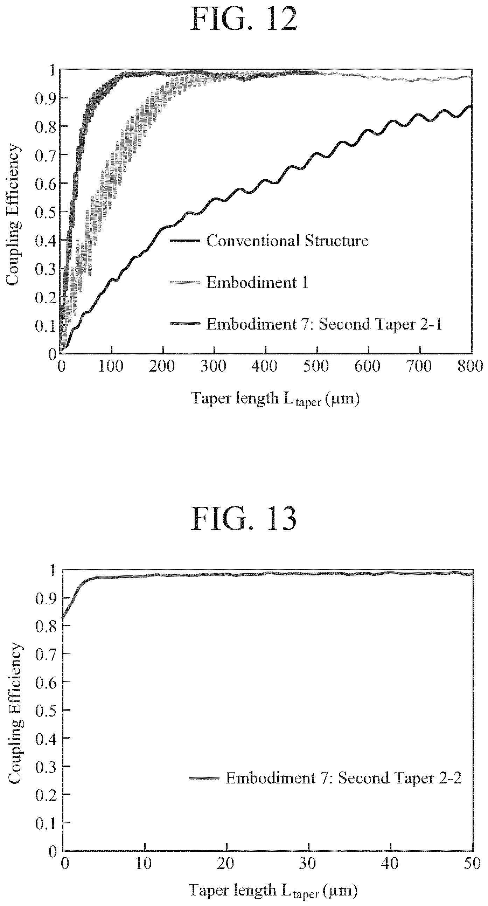

Fig. 12 is a graph showing the coupling efficiency of the hybrid optical element according to Embodiment 1 and the coupling efficiency of the hybrid optical element according to Embodiment 7 which are compared with that of the conventional technique. Fig. 12 is a graph which is acquired by performing a simulation. In the graph shown in Fig. 12, the horizontal axis shows the taper length of the second taper 2 (in Embodiment 7, the second taper 2-1), and the vertical axis shows the coupling efficiency. "Taper Length Lₜₐₚₑᵣ [µm]" described in the graph of Fig. 12 denotes the taper length, and its unit is µm. The term: "Coupling Efficiency" described in the graph of Fig. 12 denotes the coupling efficiency.

In the graph shown in Fig. 12, the plot curve according to Embodiment 7 shows that the taper length required for the coupling efficiency to reach a saturation state is approximately 100 [µm]. The taper length required for the coupling efficiency to reach the saturation state is in the order of Embodiment 7, Embodiment 1, and the conventional structure, and the taper length according to Embodiment 7 is the shortest.

Fig. 13 is a graph showing a relation between the taper length of the second taper 2-2 and the coupling efficiency in the hybrid optical element according to Embodiment 7. The graph shown in Fig. 13 shows that the coupling efficiency increases rapidly from approximately 0.8 to 1 while the taper length increases from 0 [µm] to approximately 3 [µm], and the coupling efficiency is in the saturation state in which the coupling efficiency is approximately 1 in the range where the taper length is longer than approximately 3 [µm]. In the range where the taper length is longer than approximately 3 [µm], no significant difference appears in the coupling efficiency.

It can be said that Fig. 12 shows an excellent advantageous effect provided by the hybrid optical element according to Embodiment 7. Concretely speaking, in the hybrid optical element according to Embodiment 7, the taper length required to provide sufficient coupling efficiency is short compared with both that of the conventional technique and that of Embodiment 1.

As shown in Fig. 13, in the hybrid optical element according to Embodiment 7, it is sufficient that the taper length of the second taper 2-2 is approximately 3 [µm]. A simulation result shows that, when the target coupling efficiency is set to 80 [%] and a comparison is made, the taper length in the structure with the second taper 2-2 is approximately one-third of that in the structure without the second taper 2-2, and thus is shorter than that in the structure without the second taper 2-2.

The mechanism by which the structure with the second taper 2-2 achieves a shorter length is made clear by referring to Fig. 4. As mentioned above, Fig. 4 is a graph showing the state of a propagation mode transition which occurs in the hybrid optical element according to Embodiment 1. Fig. 4 shows the state in which, at a mode intersection 1 in the second taper 2, light propagating, in the TE base mode, through the optical waveguide 8 intersects the TE fundamental mode of the light absorbing layer 9, and undergoes a mode conversion. Because this mode conversion is an adiabatic behavior, the waveguide width of the light absorbing layer 9 needs to gradually increase or decrease before and after the mode intersection 1.

On the other hand, the effective refractive indices of the TE fundamental mode and other modes in the light absorbing layer 9 are sufficiently separated at a position distant from the mode intersection 1. Therefore, an unnecessary mode conversion does not occur even though the waveguide width of the light absorbing layer 9 at that position has a steep increase or decrease.

The above-mentioned fact is the background phenomenon that led the inventors to the idea of dividing the second taper 2 into two regions. The second taper 2 is divided into the second taper 2-1 extending from the tip to the point where the mode intersection 1 occurs, and the second taper 2-2 extending from the point where the mode intersection 1 occurs to the root. As shown in Fig. 11, the second taper 2-1 extending from the tip to the point where the mode intersection 1 occurs is designed to have a small slope (have a small taper ratio). Further, the second taper 2-2 extending from the point where the mode intersection 1 occurs to the root is designed to have a large slope (have a large taper ratio) . By performing such a design, the taper length of the second taper 2 can be shortened as a whole. The width of the tip part of the second taper 2-1 may be the same as that of the light absorbing layer 9.

Although Fig. 11 shows the example in which the second taper 2 is divided into the two regions in such a way as to have slopes like those of a polygonal line, the presently disclosed technique is not limited to this example. The hybrid optical element according to the presently disclosed technique may be one in which the slope of the second taper 2 changes continuously, for example, the slope becomes large gradually from its tip.

As mentioned above, because the hybrid optical element according to Embodiment 7 has the above-mentioned technical feature, the hybrid optical element provides an advantageous effect of shortening the taper while ensuring sufficient coupling and reducing the parasitic capacitance.

### (Additional Remark)

In the application on which the priority of this application is based, the originally filed claims (Claims) are as shown below.
(Claim 1) A hybrid optical element including: a p-InP; a light absorbing layer; an n-InP; a dielectric thin film; an optical waveguide; a BOX layer; and a core substrate in order from a surface,
   in which the light absorbing layer has a second taper, and
   the light absorbing layer is exposed in the second taper.
(Claim 2) The hybrid optical element according to Claim 1, in which the hybrid optical element includes a modulation part, and
   a third taper is disposed between the second taper and the modulation part.
(Claim 3) The hybrid optical element according to Claim 1, in which the optical waveguide is an Si waveguide or an SiN waveguide.
(Claim 4) The hybrid optical element according to Claim 1, in which the hybrid optical element functions as an EA modulator, and
   causes a mode to transition from that in the optical waveguide to that in the light absorbing layer by means of an optical coupler of adiabatic transition type having the second taper.
(Claim 5) The hybrid optical element according to Claim 1, in which the hybrid optical element functions as an EA modulator or a directly modulated laser diode.
(Claim 6) A hybrid optical element manufacturing method including a process of joining a silicon photonics substrate and an InP epitaxial substrate to provide a hybrid substrate, and
   forming a device structure for the hybrid substrate,
   the method including the steps of:
      forming a light absorbing layer in such a way that the light absorbing layer has a second taper; and
      causing the light absorbing layer to be exposed in the second taper.
(Claim 7) The hybrid optical element manufacturing method according to Claim 6, in which the method includes the steps of:
   forming a modulation part; and
   forming a third taper between the second taper and the modulation part.
(Claim 8) The hybrid optical element manufacturing method according to Claim 6, in which the joining of the silicon photonics substrate and the InP epitaxial substrate is performed using either wafer bonding based on surface-activated bonding technique, or a resin material.

### INDUSTRIAL APPLICABILITY

The hybrid optical element according to the presently disclosed technique can be applied as devices for optical Ethernet communications, and has industrial applicability.

### REFERENCE SIGNS LIST

1 first taper, 2 second taper, 3 third taper, 4 n electrode, 5 p electrode, 6 n-InP (6s n-InP layer), 7 p-InP (7s p-InP layer), 8 optical waveguide, 9 light absorbing layer, 10 dielectric thin film, 11 BOX layer, 12 core substrate, 13 InP epitaxial substrate, 14 silicon photonics substrate, and 15 modulation part.

## Claims

1. A hybrid optical element comprising: a p-InP; a light absorbing layer; an n-InP; a dielectric thin film; an optical waveguide; a BOX layer; and a core substrate in order from a surface,
wherein the n-InP has a first taper,
the light absorbing layer has a second taper,
the light absorbing layer is exposed in the second taper, the p-InP includes a modulation part,
a third taper is provided between the second taper and the modulation part,
the second taper is not provided in the p-InP,
optical absorption is limited to an area close to a p electrode, and
the third taper has a taper length which is five percent or less of a length of the modulation part.

2. A hybrid optical element manufacturing method comprising:
providing a hybrid substrate by joining a silicon photonics substrate and an InP epitaxial substrate;
forming a device structure on the hybrid substrate;
forming an n-InP in such a way that the n-InP has a first taper;
forming a light absorbing layer in such a way that the light absorbing layer has a second taper;
forming the second taper in such a way that the light absorbing layer is exposed;
forming a modulation part in a p-InP; and
forming a third taper between the second taper and the modulation part in such a way that the third taper has a taper length which is five percent or less of a length of the modulation part, wherein
the p-InP is not provided on the second taper, and
optical absorption is limited to an area close to a p electrode.

3. A hybrid optical element comprising: a p-InP; a light absorbing layer; an n-InP; a dielectric thin film; an optical waveguide; a BOX layer; and a core substrate in order from a surface, wherein
the light absorbing layer has a second taper,
the light absorbing layer is exposed in the second taper, and
a taper ratio of a tip part, which is a part from a tip to a point where a mode intersection occurs of the second taper, is smaller than a taper ratio of a root part, which is a part from the point where mode intersection occurs to a root of the second taper.

4. The hybrid optical element according to claim 3, further comprising:
a modulation part; and
a third taper disposed between the second taper and the modulation part.

5. The hybrid optical element according to claim 3, wherein the optical waveguide is an Si waveguide or an SiN waveguide.

6. The hybrid optical element according to claim 3, wherein the hybrid optical element functions as an EA modulator, and
a mode of the hybrid optical element is changed from the optical waveguide to the light absorbing layer by means of an optical coupler of adiabatic transition type having the second taper.

7. The hybrid optical element according to claim 3, wherein the hybrid optical element functions as an EA modulator or a directly modulated laser diode.

8. A hybrid optical element manufacturing method comprising:
providing a hybrid substrate by joining a silicon photonics substrate and an InP epitaxial substrate;
forming a device structure on the hybrid substrate,
forming a light absorbing layer in such a way that the light absorbing layer has a second taper;
forming the second taper in such a way that the light absorbing layer is exposed; and
a taper ratio of a tip part, which is a part from a tip to a point where a mode intersection occurs of the second taper, is smaller than a taper ratio of a root part, which is a part from the point where mode intersection occurs to a root of the second taper.

9. The hybrid optical element manufacturing method according to claim 8, further comprising:
forming a modulation part; and
forming a third taper between the second taper and the modulation part.

10. The hybrid optical element manufacturing method according to claim 8, wherein the joining of the silicon photonics substrate and the InP epitaxial substrate is performed using either wafer bonding based on surface-activated bonding technique, or a resin material.
